# EUROPEAN PATENT SPECIFICATION

(11) **EP 1 045 498 B1**
(45) Date of publication and mention of the grant of the patent: **29.08.2007**
(21) Application number: 00107191.9
(22) Date of filing: 12.04.2000
(51) Int. Cl.: H02B 13/035

(54) **Vacuum insulated switch gear**
Vakuumisolierte Schaltanlage
Installation de commutation sous vide

(30) Priority: 12.04.1999 JP 10458099; 04.11.1999 JP 31412299
(43) Date of publication of application: 18.10.2000
(73) Proprietor: MITSUBISHI DENKI KABUSHIKI KAISHA, Chiyoda-ku Tokyo 100-8310 (JP)
(72) Inventor: Itotani, Takayuki, Chiyoda-ku, Tokyo 100-8310 (JP); Maruyama, Toshimasa, Chiyoda-ku, Tokyo 100-8310 (JP); Sato, Toshifumi, Chiyoda-ku, Tokyo 100-8310 (JP); Miyamoto, Seiichi, Chiyoda-ku, Tokyo 100-8310 (JP); Kobayashi, Minoru, Chiyoda-ku, Tokyo 100-8310 (JP)
(74) Representative: HOFFMANN EITLE

(56) References cited:
- EP-A- 0 863 526
- EP-A- 0 893 811
- WO-A-99/17412

## Description

### BACKGROUND OF THE INVENTION

The present invention relates to a switch gear comprising a vacuum housing which is to be electrically insulated from a ground potential, said housing houses therein: a main circuit switch section for establishing/disconnecting a connection between a stationary electrode connected to either a busline-side conductor or a load-side conductor, and a movable electrode connected to the remaining conductor; and a ground switch section for establishing/disconnecting a connection between a stationary electrode connected to either the load-side conductor or a ground conductor, and a movable electrode connected to the remaining conductor. Such a switch gear is known from EP 0 893 811. A switch gear may comprises a function unit in which there are integrally provided a main circuit switch section for establishing/disconnecting a connection between a busline-side conductor and a load-side conductor, and a ground switch section for establishing/disconnecting a connection between the load-side conductor and a ground-side conductor.

A switch gear used for distributing power received by way of a busline to various types of equipment serving as loads or to another electric room may comprise a grounded metal housing. The metal housing houses a busline-side conductor for establishing a connection with the busline; a connection conductor, such as a load-side conductor, for establishing a connection with a transmission cable which transmits power to a load; a main circuit switch for establishing/disconnecting a connection between the busline-side conductor and the load-side conductor; a ground switch for grounding the load-side conductor; and control equipment required for monitoring and controlling purposes.

One such switch gear is described in Japanese Patent Publication No. 28488/1995. The switch gear has a function unit, the function unit integrally comprising a main circuit switch and a ground switch, along with a portion of a connection conductor. The function unit is housed in a box and performs only an operation for establishing a connection between a busline and a transmission cable.

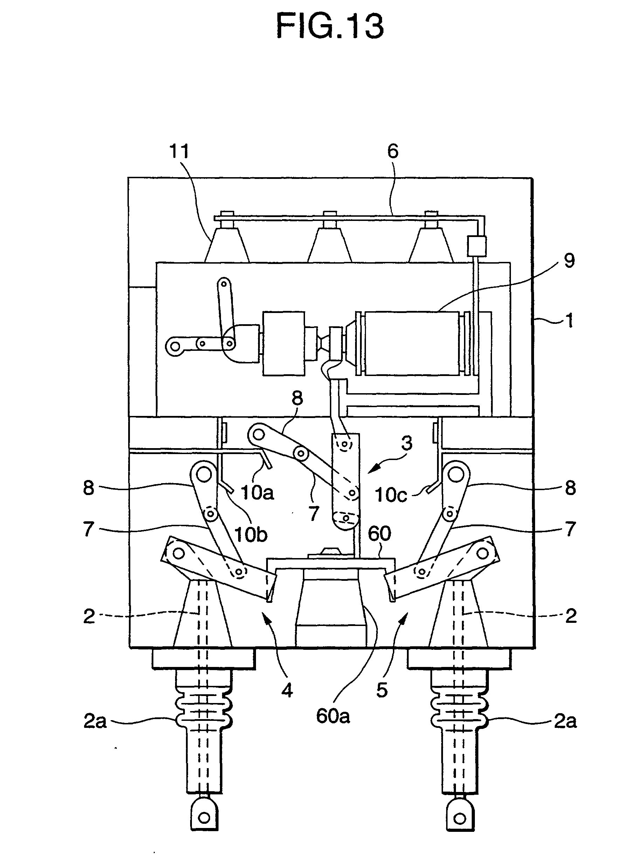

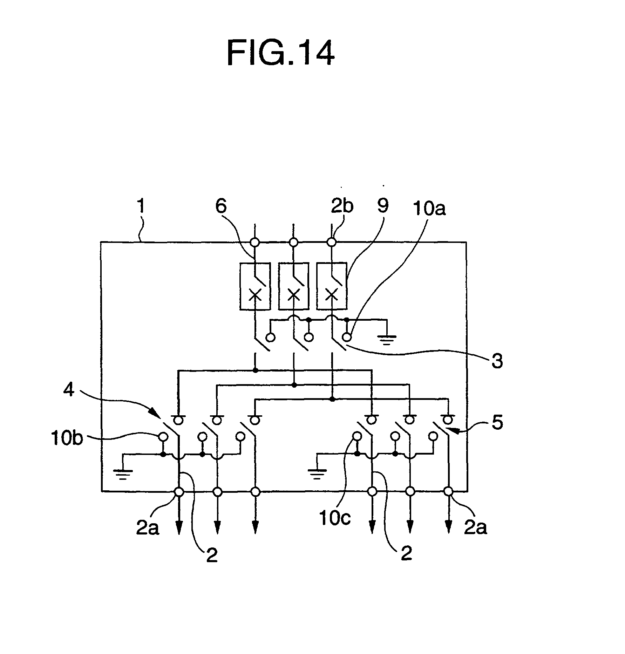

FIG. 13 is a cross-sectional plan view showing the configuration of the principal section of the switch gear, and FIG. 14 is an electrical connection diagram showing the principal section. As shown in FIG. 13, the switch gear comprises a metal housing 1 filled with insulation gas; bushings 2a provided so as to penetrate through portions of the peripheral wall surface of the housing 1, for connecting transmission cables; and a bushing 2b provided so as to penetrate through a portion of the peripheral wall surface of the housing 1 for connecting the busline. A first switch 3, a second switch 4, a third switch 5, and a vacuum arc-extinguishing chambers 9 are provided within the housing 1.

A busline-side branch conductor 6 connected to an unillustrated external busline by way of the bushing 2b is supported by insulating support porcelain dads 11 mounted on a portion of the peripheral wall of the housing 1 and is housed within the housing 1. The busline-side branch conductor 6 is connected to an intermediate conductor 60 which is fixedly supported by an insulating support porcelain clad 60a attached to a portion of the peripheral wall of the housing 1, by way of unillustrated switches provided in the vacuum arc-extinguishing chamber 9 and the first switch 3. A conducting path is divided into two branch lines by the intermediate conductor 60; one branch line is connected to a load-side conductor 2 supported by one of the bushings 2a via the second switch 4, and the other branch line is connected to another load-side conductor 2 supported by the other bushing 2a via the third switch 5. The branch lines are connected to unillustrated external transmission cables by way of the load-side conductors 2.

FIG. 13 shows only a single-phase circuit. However, as shown in FIG. 14, the switch gear is formed into a three-phase circuit. Therefore, for each phase there is provided a circuit which comprises the bushings 2a and 2b, the first switch 3, the second switch 4, and the third switch 5.

Each of the switches 3, 4, and 5 is provided with a swaying electrode which is swayed in accordance with the action of an unillustrated individual operation mechanism transmitted by way of insulating links 7 and metal links 8. In accordance with the swayed position of the swaying electrode, the first switch 3 is switched among a closed position, a ground position, and a disconnection position. In the closed position, an output terminal of an internal switch of the vacuum arc-extinguishing chamber 9 is connected to a protruding stationary electrode located at a corresponding position on the intermediate conductor 60. In the ground position, the swaying electrode is connected to a ground conductor 10a. The disconnection position is an intermediate position between the closed position and the ground position and is spaced away from the stationary electrode and the ground conductor 10a.

Similarly, the second switch 4 is switched, by means of swaying action of a corresponding swaying electrode, among the three positions through use of the load-side conductor 2, a protruding stationary electrode provided at a corresponding position on the intermediate conductor 60, and a ground conductor 10b. Further, the third switch 5 is switched, by means of swaying action of a corresponding swaying electrode, among three positions through use of the load-side conductor 2, a protruding stationary electrode provided at a corresponding position on the intermediate conductor 60, and a ground conductor 10c.

In the above-described configuration of the switch gear, a main circuit switch section for establishing/disconnecting a connection between the busline-side branch conductor 6 and the load-side conductor 2, and a ground switch section for grounding the load-side conductor 2 are provided within the housing 1 along with a connection conductor. The only requirements are that the busline-side branch conductor 6 be connected, by way of the bushing 2b, to a busline disposed outside the housing 1 and that the load-side conductor 2 be connected, by way of the bushing 2a, to a transmission cable disposed outside the housing 1.

As mentioned above, since in the conventional switch gear the housing 1 is grounded, a potential difference between charging sections of the respective first, second, and third switches 3, 4, and 5 and the housing 1 becomes great, and hence grounding fault is apt to arise.

The first and second switches 3 and 4 or the first and third switches 3 and 5 are connected in series between the busline-side branch conductor 6 and the load-side conductor 2. In order to ensure sufficient space for these switches, miniaturization of the housing 1 is limited.

The housing 1 is filled with insulating gas. In each of the switches 3, 4, and 5, an insulation distance corresponding to the type of insulating gas must be ensured between the three phases of the three-phase circuit, between the swaying electrode and the ground conductor, and between the swaying electrode, the ground conductor, and the stationary electrode. As a result, the switches 3, 4, and 5 become bulky, and ensuring a sufficient isolation distance between the switches 3, 4, and 5 imposes a limitation on miniaturization of the housing.

The vacuum arc-extinguishing chamber 9 is provided for each phase of the three-phase circuit. Ensuring sufficient space for the vacuum arc-extinguishing chambers 9 poses a limitation on miniaturization of the housing 1 and results in an increase in product cost.

In the event of occurrence of an arc shortcircuit in the housing 1, there occurs an explosion in which the insulating gas filled in the container 1 becomes hot and highly pressurized within a short period of time by means of arc energy. In order to prevent occurrence of the explosion, a release section for releasing pressure must be formed in the housing 1, and demand exists for the housing 1 to have sufficient strength for withstanding a high pressure until release of an internal pressure is completed. Accordingly, the structure of the housing1 becomes complicated, and product cost increases.

Further, a switch gear may be equipped with; for example, a main circuit switch section for establishing/disconnecting a connection between a busline-side conductor and a load-side conductor and a ground switch section for establishing/disconnecting a connection between the load-side conductor and a ground-side conductor.

A switch gear (enclosed switchboard) used for distributing power received by way of a busline to various types of equipment serving as loads or to another electric room comprises a grounded metal housing. The metal housing houses a main circuit switch section which establishes/disconnects a connection between a busline-side conductor for establishing a connection with the busline and a load-side conductor for establishing a connection with a load; a ground switch section for establishing/disconnecting a connection between the load-side conductor and a ground-side conductor; and control equipment required for monitoring and controlling purposes.

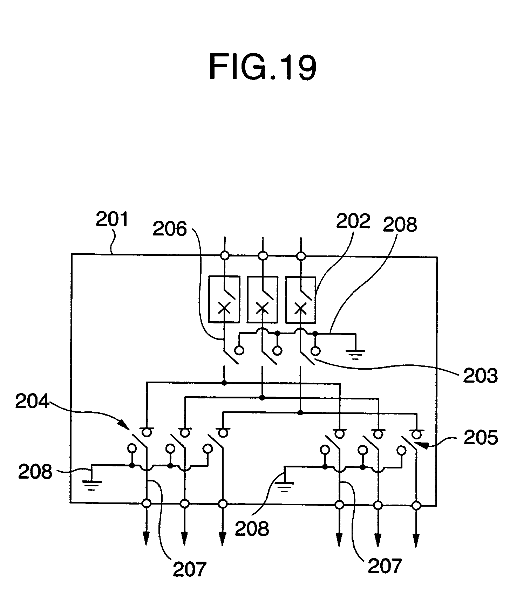

FIG. 19 is an electric circuit diagram showing an example switch gear. The switch gear comprises a housing 201 filled with insulating gas, a breaker 202, a first switch 203, a second switch 204, and a third switch 205.

When there is performed maintenance and inspection of load-side receiving-and-transformation equipment of the switch gear, the first switch 203, the second switch 204, and the third switch 205 are opened after the breaker 202 has been disconnected. Subsequently, the first switch 203 is actuated so as to electrically connect the busline-side conductor 206 with the ground conductor 208, thus grounding the busline-side conductor 206. Further, the second switch 204 and the third switch 205 are actuated so as to electrically connect the load-side conductor 207 with the ground conductor 208, thus grounding the load-side conductor 207. Through these operations, electric charges remaining in and induced currents arising in the busline and loads are caused to flow to ground, and re-application of power from the power source to the busline and the loads is prevented, thus ensuring safety of workers.

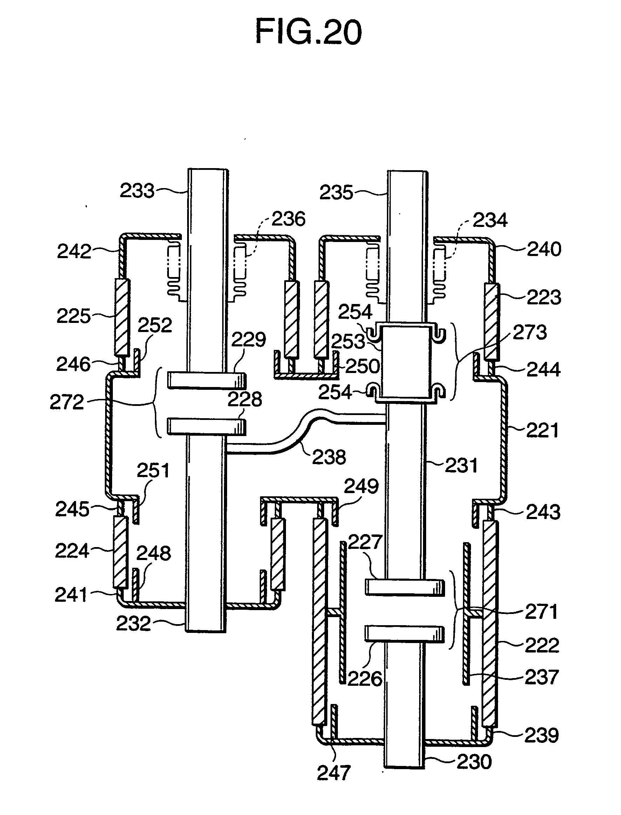

FIG. 20 is a front cross-sectional view showing the principal section of another conventional switch gear example. A main circuit switch section 271 and a ground switch section 272 are provided within a metal housing body 221 of the switch gear. The main circuit switch section 271 comprises a stationary electrode 226 mounted on a stationary electrode rod 230 which acts as a busline-side conductor, and a movable electrode 227 mounted on a movable electrode rod 231. The stationary electrode rod 230 is attached to and electrically isolated from the housing body 221, by way of a first metal sealing section 239, a first ceramic insulation section 222, and a second metal sealing section 243. The movable electrode rod 231 is connected to an operation rod 235, by way of an insulation rod 273. The operation rod 235 is connected to a drive mechanism which switches the main circuit switch section 271 among a closed position, a shut-off position, and a open position. Further, the operation rod 235 is connected to a third sealing section 240, by way of a bellows 234. The third sealing section 240 is connected to the housing body 221 by way of a second sealing section 223 and a fourth sealing section 244.

The main circuit switch section 271 can be actuated while the internal air-tight seal of the housing body 221 is maintained by means of the bellows 234. The insulation rod 273 comprises an insulation section 253 and a shield section 254 attached to either end of the insulation section 253. The shield sections 254 are attached to the insulation section 253 for alleviating an electric field developing in a connection boundary between the insulation section 253 and the shield sections 254, protecting the surface of the insulation section 253, and protecting the insulation section 253 and the bellows 234 from metallic vapor which develops from electrodes 226 and 227 when the main circuit switch section 271 closes or opens a conducting path. An arc shield section 237 is provided around the main circuit switch section 271 and mounted on the first insulation section 222 for preventing splashing of metallic vapor from the electrodes 226 and 227, which would otherwise occur at the time of opening/closing of a conducting path. The main circuit switch section 271 is electrically insulated from the housing body 221. A first ring 247 is provided in the vicinity of a brazed section between the first sealing section 239 which is to act as a charging section and the first ceramic insulation section 222. A second ring 249 is provided in the vicinity of a brazed section between the second sealing section 243 which is to act as a charging section and the first ceramic insulation section 222. A third ring 250 is provided in the vicinity of a brazed section between the third and fourth sealing sections 240 and 244 which are to act as charging sections and the second insulation section 223. The first through third rings 247, 249, and 250 are provided for alleviating an electric field. The first ring 247 and the second ring 249 are provided inside the first insulation section 222 for protecting the interior wall surface of the first insulation section 222 from being stained by metallic vapor. The third ring 250 is provided inside the second insulation section 223 for protecting the interior wall surface of the second insulation section 223 from being stained by metallic vapor.

The ground switch section 272 comprises a stationary electrode 228 mounted on a stationary electrode rod 232 which serves as a load-side conductor, and a movable electrode 229 mounted on a movable electrode rod 233 which serves as a grounded ground-side conductor. The stationary electrode rod 232 is attached to the housing body 221, by way of a first sealing section 241, a first insulation section 224, and a second sealing section 245. The movable electrode rod 233 is connected to a third sealing section 232 by way of a bellows 236. A third sealing section 242 is connected to the vacuum housing body 221, by way of a second insulation section 225 and a fourth sealing section 246.

The ground switch section 272 can be actuated while the internal air-tight seal of the vacuum housing body 221 is maintained by means of the bellows 236. A first ring 248 is provided in the vicinity of a brazed section between the first sealing section 241 which is to act as a charging section and the first ceramic insulation section 224. A second ring 251 is provided in the vicinity of a brazed section between the second sealing section 245 which is to act as a charging section and the first ceramic insulation section 224. A third ring 252 is provided in the vicinity of a brazed section between the third sealing section 42 and the fourth sealing section 246 which are to act as charging sections and the second insulation section 225. The first through third rings 248, 251, and 252 are provided for alleviating an electric field. The first ring 248 and the second ring 251 are provided inside the first insulation section 224 for protecting the interior wall surface of the first insulation section 224 from being stained by metallic vapor. The third ring 252 is provided inside the second insulation section 225 for protecting the interior wall surface of the second insulation section 225 from being stained by metallic vapor.

The movable electrode rod 231 of the main circuit switch section 271 is electrically connected to the stationary electrode rod 233 of the ground switch section 272 by means of an elastic conductor 238. In a case where the main circuit switch section 271 is closed and where the ground switch section 272 is open, an electric current supplied from the busline flows to loads by way of the stationary electrode rod 230, the elastic conductor 238, and the stationary electrode rod 232.

The operation of the switch gear having the foregoing configuration will now be described.

During a normal operation, the operation rod 235 is actuated in a downward direction in FIG. 20, to thereby bring the movable electrode 227 into contact with the stationary electrode 226. Further, the movable electrode rod 233 is actuated upwardly, to thereby separate the movable electrode 229 away from the stationary electrode 228. The power supplied from the busline flows to loads, i.e., various types of equipment serving as loads, by way of the stationary electrode rod 230, the movable electrode rod 231, the elastic conductor 238, and the stationary electrode rod 232.

At the time of maintenance and inspection of equipment, the operation rod 235 is actuated in an upward direction in FIG. 20, to thereby separate the movable electrode 227 away from the stationary electrode 226 to a shut-off position and further to an open position. Subsequently, the movable electrode rod 233 shown in FIG. 20 is actuated downwardly, to thereby bring the movable electrode 229 into contact with the stationary electrode 228. Accordingly, the grounded movable electrode rod 233 is electrically connected with the stationary electrode rod 232, and hence electric charges remaining in and induced currents arising in the loads are caused to flow to ground by way of the stationary electrode rod 232 and the movable electrode rod 233. Further, the movable electrode 227 is separated from the stationary electrode 226 to a open position. Hence, application of power from the busline to various types of equipment acting as loads is prevented, thereby enabling a maintenance worker to perform maintenance safely.

In the switch gear having the above-described configuration, the movable electrode 229 and the stationary electrode 228 of the ground switch section 272 and the movable electrode 227 and the stationary electrode 226 of the main circuit switch section 271 are of the same size, which in turn renders the entire switch gear bulky. The movable electrode 229 and the stationary electrode 228 of the ground switch section 272 are made of, for example, Cu-W-based alloy, thus rendering the entire switch gear large and expensive.

### SUMMARY OF THE INVENTION

The present invention relates to a switch gear as initially described characterised by a sealing member or section; and a ring alleviating an electric field developing in boundary areas between said sealing member or section and said housing and protecting the internal surface of said sealing member or section.

Embodiments of the present invention have been conceived against the backdrop mentioned above and is aimed at providing a switch gear which diminishes occurrence of a grounding fault by means of isolating a vacuum container from a ground potential.

Embodiments of the present invention are also aimed at providing a switch gear which can be made significantly more compact than a prevailing switch gear, by means of housing a main circuit switch section and a ground switch section in a single vacuum container.

Embodiments of the present invention are also aimed at providing a switch gear which is simpler in structure than a prevailing switch gear, thus diminishing product cost.

Embodiments of the present invention are also aimed at providing a switch gear which comprises a main circuit switch section and a ground switch section in a vacuum, thereby preventing occurrence of an explosion, which would otherwise be cause when an arc short circuit arises in a housing.

Accordingly, embodiments of the present invention provides a switch gear comprising: a vacuum housing which is to be electrically insulated from a ground potential, housing therein: a main circuit switch section for establishing/ disconnecting a connection between a stationary electrode connected to either a busline-side conductor or a load-side conductor and a movable electrode connected to the remaining conductor; and
a ground switch section for establishing/disconnecting a connection between a stationary electrode connected to either the load-side conductor or a ground conductor and a movable electrode connected to the remaining conductor.

In the switch gear according to embodiments of the present invention, the vacuum housing is electrically isolated from a ground potential, and the potential of the vacuum housing equals to an intermediate potential between the electric potential of the charging sections belonging to the main circuit switch section and the ground switch section and the ground potential outside the vacuum housing. A potential difference between the vacuum housing and the charging sections and a potential difference between the vacuum housing and the ground potential do not increase, thus reducing the risk of occurrence of a grounding fault.

The main circuit switch section and the ground switch section are housed in a highly-insulating vacuum, and hence a required insulation distance between components can be diminished. Therefore, the switch gear of embodiments of the present invention can be made more compact greater than can a prevailing switch gear.

Even in the event of an arc short circuit arising in the vacuum housing, no gas is present in the vacuum container, thereby eliminating the risk of explosion, which would otherwise be caused by an arc short circuit.

Preferably, two operation sections, one actuating the main circuit switch section and the other actuating the ground switch section, are provided side by side within the outer peripheral surface of the vacuum housing.

In the switch gear according to the second embodiment, the operation section of the main circuit switch section and the operation section of the ground switch section can be arranged adjacently to each other, thereby facilitating interlock between the drive mechanisms of the operation sections.

Preferably, an electrode pair of the main circuit switch section is provided inside insulating material for electrically insulating a stationary portion of the main circuit switch section from the vacuum housing.

In embodiments of the present invention, the electrode pair of the main circuit switch section is housed in the insulating material, thus improving withstand voltage performance. Accordingly, the insulating material can be made large, and the vacuum housing can be made compact, thereby diminishing product cost.

Preferably, an arc shield provided around the electrode of the main circuit switch section is electrically insulated from the vacuum housing.

In embodiments of the present invention, the arc shield is electrically insulated from the vacuum housing. Even in the event of a discharge occurring from the electrode pair of the main circuit switch section to the arc shield, the vacuum housing is prevented from assuming a high electric potential, thus improving the withstand voltage performance of the switch gear.

Preferably, the switch gear comprises an insulation rod which is connected to a load-side electrode of the main circuit switch section and is equipped with a metal shield for alleviating an electric field, and an elastic conductor which is electrically connected to a load-side electrode of the main circuit switch section as well as to a load-side electrode of the ground switch section, a stationary portion of the elastic conductor close to the main circuit switch section having an outer diameter greater than that of the insulation rod.

In embodiments of the present invention, the outer diameter of the stationary section of the elastic conductor close to the main circuit switch section is greater than that of the insulation rod. The stationary section alleviates concentration of an electric field on the end of the shields of the insulation rod and prevent metallic vapor emitted from the main circuit switch section from adhere to the surface of the insulating material of the insulation rod.

Preferably, the insulation rod of the main circuit switch section is provided inside an insulating material for electrically insulating a movable portion of the main circuit switch section from the vacuum housing, and an electrode pair of the ground switch section is disposed inside an insulating material for electrically insulating a movable portion of the ground switch section from the vacuum housing.

In embodiments of the present invention, the insulation rod and the electrode pair of the ground switch section are disposed inside the insulating material, thus improving withstand voltage performance to a much greater extent.

Preferably, a pair of electrodes which can be opened or closed are provided at a position in an elastic conductor which electrically connects a load-side electrode of the main circuit switch section with a load-side electrode of the ground switch section.

In embodiments of the present invention, the busline can be connected to or disconnected from a load by means of an electrode pair provided at any portion on the elastic conductor as well as at any portion of the main circuit switch section, thus improving the withstand voltage performance of the switch gear to a much greater extent.

Embodiments of the present invention have been conceived to solve the drawback of the conventional switch gear and is aimed at providing a switch gear which can be made compact and inexpensive.

Accordingly, embodiments of the present invention provide a switch gear, in which a movable electrode and a stationary electrode of a ground switch section are smaller than a movable electrode and a stationary electrode of a main circuit switch section.

Embodiments of the present invention also provide a switch gear, in which a movable electrode and a stationary electrode of a open switch section and a movable electrode and a stationary electrode of a ground switch section are smaller than a movable electrode and a stationary electrode of a shut-off switch section.

Preferably, a magnetic-field generation section is provided on the back of the movable electrode of the ground switch section, and a magnetic-field generation section is provided on the back of the stationary electrode of the ground switch section. When a conducting path is closed, the magnetic-field generation sections generate a magnetic field so as to cause the movable electrode and the stationary electrode to attract each other.

Preferably, the movable electrode and the stationary electrode of the open switch section and the movable electrode and the stationary electrode of the ground switch section are formed into a single shape and from a single material.

Preferably, the movable electrode and the stationary electrode of the main circuit switch section are made of material differing from that from which the movable electrode and the stationary electrode of the ground switch section are formed.

Preferably, the material from which the movable electrode and the stationary electrode of the shut-off switch section is different from that from which the movable electrode and the stationary electrode of the open switch section and the movable electrode and the stationary electrode of the ground switch section are formed.

Preferably, a housing corresponds to a vacuum housing.

### BRIEF DESCRIPTION OF THE DRAWINGS

To enable a better understanding of the invention, and to show how the same may be carried into effect, reference will now be made, by way of example only, to the accompanying drawings, in which:
FIG. 1 is a front cross-sectional view showing the structure of the principal section of a switch gear according to a first embodiment of the present invention;
FIG. 2 is a top view showing the structure of the principal section of a switch gear according to the first embodiment;
FIG. 3 is a side view showing the structure of the principal section of a switch gear according to the first embodiment;
FIG. 4 is a front cross-sectional view showing the structure of the principal section of a switch gear according to a second embodiment of the present invention;
FIG. 5 is a top view showing the structure of the principal section of a switch gear according to the second embodiment;
FIG. 6 is a side view showing the structure of the principal section of a switch gear according to the second embodiment;
FIG. 7 is a front cross-sectional view showing the structure of the principal section of a switch gear according to a third embodiment of the present invention;
FIG. 8 is a side view showing the structure of the principal section of a switch gear according to the third embodiment;
FIG. 9 is a front cross-sectional view showing the structure of the principal section of a switch gear according to a fourth embodiment of the present invention;
FIG. 10 is a front cross-sectional view showing the structure of the principal section of a switch gear according to a fifth embodiment of the present invention;
FIG. 11 is a front cross-sectional view showing the structure of the principal section of a switch gear according to a sixth embodiment of the present invention;
FIG. 12 is a front cross-sectional view showing the structure of the principal section of a switch gear according to a seventh embodiment of the present invention;
FIG. 13 is a cross-sectional plan showing the structure of the principal section of a prevailing switch gear; and
FIG. 14 is an electrical connection diagram showing the prevailing switch gear.
FIG. 15 is a front cross-sectional view showing the principal section of a switch gear according to an eighth embodiment of the present invention;
FIG. 16 is a front cross-sectional view showing the principal section of a switch gear according to a ninth embodiment of the present invention;
FIG. 17 is a front cross-sectional view showing the principal section of another conventional switch gear example according a tenth embodiment;
FIG. 18 is a perspective view showing the principal section shown in FIG. 17;
FIG. 19 is an electric circuit diagram showing an example conventional switch gear; and
FIG. 20 is a front cross-sectional view showing the principal section of another conventional switch gear example.

### DETAILED DESCRIPTION OF THE PREFERRED EMBODIMENTS

### (First Embodiment)

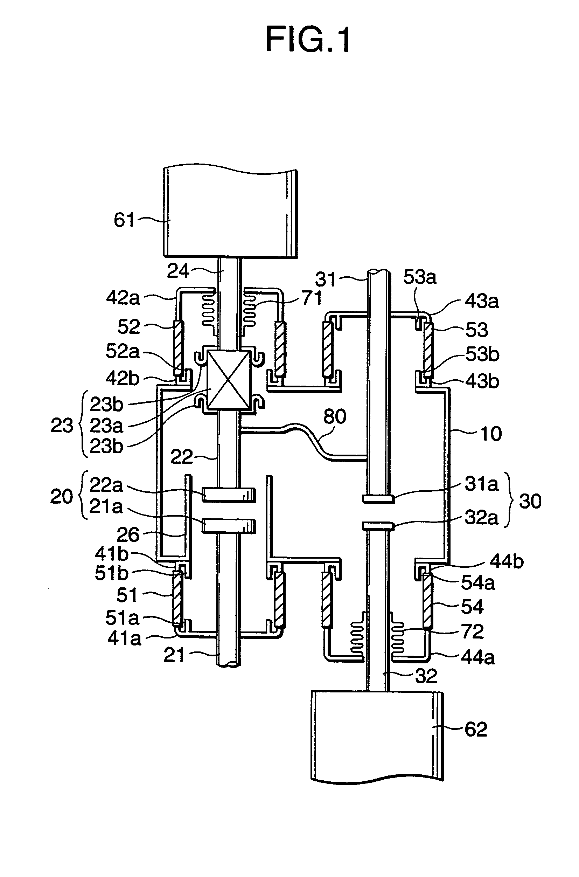

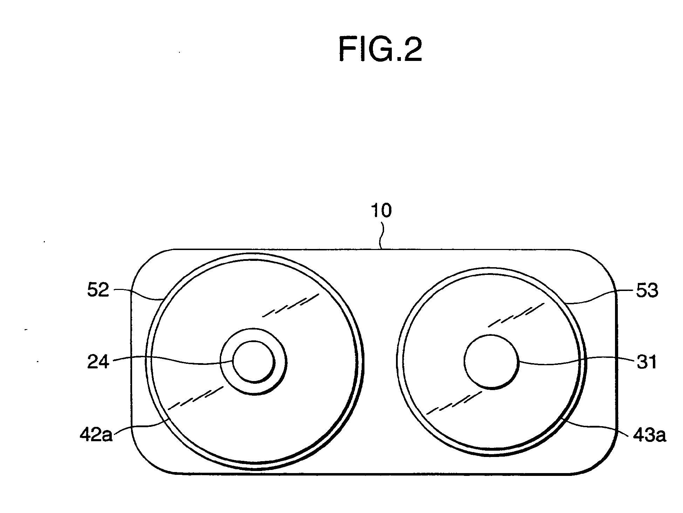

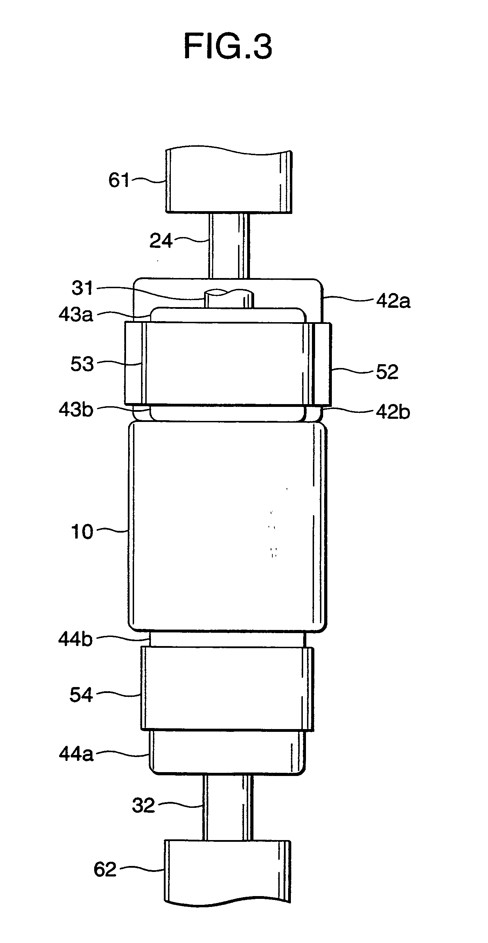

FIG. 1 is a front cross-sectional view showing the structure of the principal section of a switch gear according to a first embodiment of the present invention; FIG. 2 is a top view of the same; and FIG. 3 is a side view of the same.

In the drawing, reference numeral 10 designates a vacuum housing. A main circuit switch section 20 and a ground switch section 30 are housed in the vacuum housing 10. The main circuit switch section 20 comprises a stationary electrode 21a provided at the leading end of a stationary electrode rod 21 connected to a busline, and a movable electrode 22a provided at the leading end of a movable electrode rod 22. The stationary electrode rod 21 is attached to and electrically isolated from the vacuum housing 10 via a sealing member 41a, an insulting material 51, and a sealing member 41b. The movable electrode rod 22 is connected to an operation rod 24 along a longitudinal direction via an insulation rod 23. The operation rod 24 is connected to an operation section 61 which switches the main circuit switch section 20 among a closed position, a shut-off position, and a disconnection position. The operation rod 24 is connected to and electrically isolated from the vacuum housing 10 via a bellows 71, a sealing member 42a, an insulating material 52, and a sealing member 42b. The operation rod 24 can be actuated while the internal air-tight seal of the vacuum housing 10 is maintained.

The insulation rod 23 comprises a cylindrical insulating material 23a, and annular metal shields 23b each having a U-shaped cross-section when viewed along a longitudinal direction. The metal shields 23b are attached to either end of the insulating material 23a. The shields 23b are attached to the insulating material 23a for alleviating an electric field developing in a connection boundary between the shield 23b and the insulating material 23a, protecting the surface of the insulating material 23a, and protecting the insulating material 23a and the bellows 71 from metallic vapor which develops when the main circuit switch section 20 closes or opens a conducting path.

A cylindrical arc shield 26 is provided around the main circuit switch section 20 and mounted on the vacuum housing 10 for preventing splashing of metallic vapor, which would otherwise occur at the time of opening/closing of a conducting path. A ring 51a is provided in a boundary area between the sealing member 41a and the insulating material 51; a ring 51b is provided in a boundary area between the insulating material 51 and the sealing member 41b; and a ring 52a is provided in a boundary area between the insulating material 52 and the sealing member 42b. These rings 51a, 51b, and 52a are provided for alleviating an electric field developing in the boundary areas and protecting the interior surface of the insulating materials 51 and 52 from staining, which would otherwise be caused by metallic vapor.

The ground switch section 30 comprises a stationary electrode 31a provided at the leading end of a stationary electrode rod 31, and a movable electrode 32a provided at the leading end of a movable electrode rod 32, the stationary electrode rod 31 and the movable electrode rod 32 being arranged in parallel with the stationary electrode rod 21 and the movable electrode rod 22. The stationary electrode rod 31 is provided on the same side as that on which the movable electrode 22a of the main circuit switch section 20 is located, and the movable electrode rod 32 is provided on the same side as that on which the stationary electrode 21a of the main circuit switch section 20 is located. The stationary electrode rod 31 is fixed on and electrically insulated from the vacuum housing 10 via a sealing member 43a, an insulating material 53, and a sealing member 43b. The movable rod 32 is connected to an operation section 62 for switching the ground switch 30. The movable electrode rod 32 is connected to and electrically insulated from the vacuum housing 10 via a bellows 72, a sealing member 44a, an insulating material 54, and a sealing member 44b. The movable electrode 32 can be moved while the internal air-tight seal of the vacuum housing 10 is maintained.

A ring 53a is provided in a boundary area between the sealing member 43a and the insulating material 53; a ring 53b is provided in a boundary area between the insulating material 53 and the sealing member 43b; and a ring 54a is provided in a boundary area between the insulating material 54 and the sealing member 44b. These rings 53a, 53b, and 54b are provided for alleviating an electric field developing in the boundary areas and protecting the interior surface of the insulating materials 53 and 54 from staining, which would otherwise be caused by metallic vapor.

The movable electrode rod 22 of the main circuit switch section 20 is electrically connected to the stationary electrode rod 31 of the ground switch section 30 by means of a deformable, elastic conductor 80. In a case where the main circuit switch section 20 is closed and where the ground switch section 30 is open, an electric current flows between the stationary electrode rod 21 of the main circuit switch section 20 and the stationary electrode rod 31 of the ground switch section 30.

In the above-described switch gear, the vacuum housing 10 is not grounded, and the electric potential of the vacuum container is equal to an intermediate potential between the electric potential of the charging sections belonging to the main circuit switch section 20 and the ground switch section 30, and the ground potential outside the vacuum housing 10. A potential difference between the vacuum housing 10 and the charging sections and a potential difference between the vacuum housing 10 and the ground potential do not increase, thus reducing the risk of occurrence of a grounding fault.

The main circuit switch section 20 and the ground switch section 30 are constituted within a highly-insulating vacuum, and hence a required insulation distance between components can be diminished. Therefore, the switch gear of the present invention can be made more compact than can a prevailing switch gear.

Even in the event of an arc short circuit arising in the vacuum housing 10, no gas is present in the vacuum container 10, thereby eliminating the risk of explosion, which would otherwise be caused by an arc short circuit.

### (Second Embodiment)

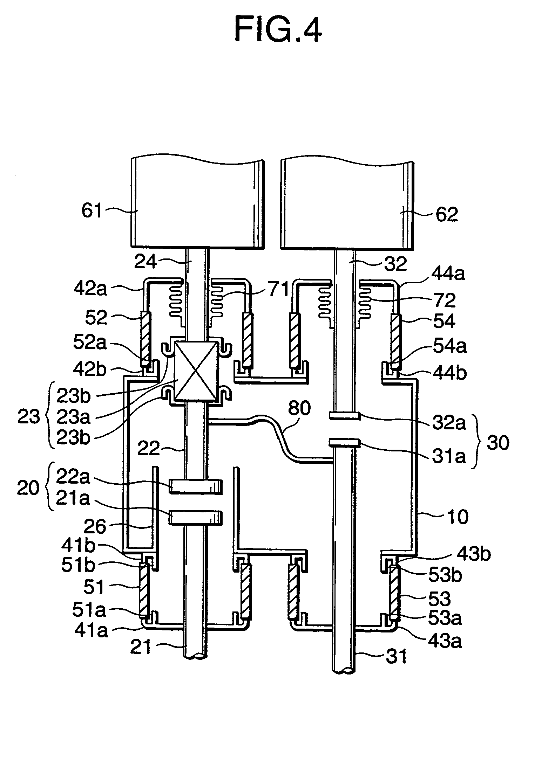

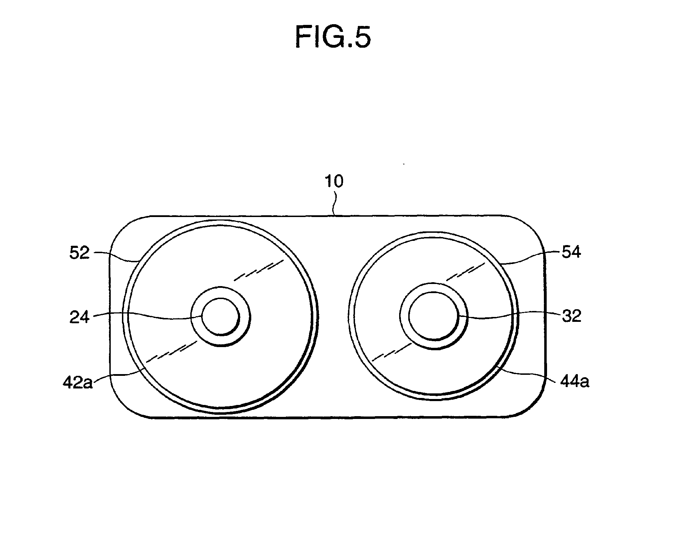

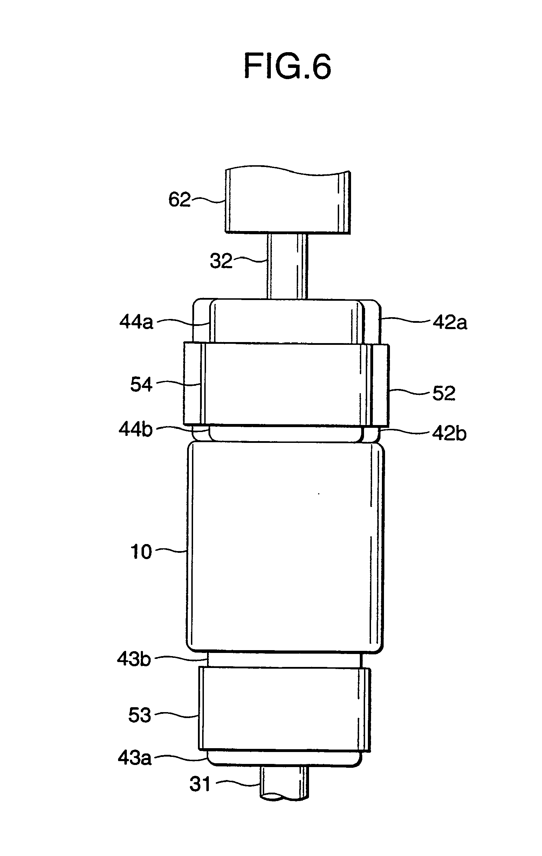

FIG. 4 is a front cross-sectional view showing the structure of the principal section of a switch gear according to a second embodiment of the present invention; FIG. 5 is a top view of the same; and FIG. 6 is a side view of the same.

The operation section 61 for actuating the main circuit switch section 20 and the operation section 62 for actuating the ground switch section 30 are provided in the outer periphery of the vacuum housing 10 in a side-by-side configuration. The operation rod 24 and the movable electrode rod 32 are provided in parallel with each other on the same side of the vacuum housing 10 and protrude from the same side surface of the vacuum housing 10, connecting with the respective operation sections 61 and 62 provided side by side. The stationary electrode rod 21 of the main circuit switch section 20 and the stationary electrode rod 31 of the ground switch section 31 are arranged side by side and opposite the operation rod 24 and the movable electrode rod 32. The stationary electrode rod 21 and the stationary electrode rod 31 protrude outside the vacuum housing 10 from the side surface thereof opposite that from which the operation rod 24 and the movable electrode rod 32 protrude. In other respects, the elements which are the same as those described in connection with the first embodiment are assigned the same reference numerals, and repeated explanations thereof are omitted.

In the switch gear having the previously-described configuration, the operation section 61 of the main circuit switch section 20 and the operation section 62 of the ground switch section 30 can be arranged adjacent to each other, thereby facilitating interlock between the drive mechanisms of the operation sections 61 and 62.

### (Third Embodiment)

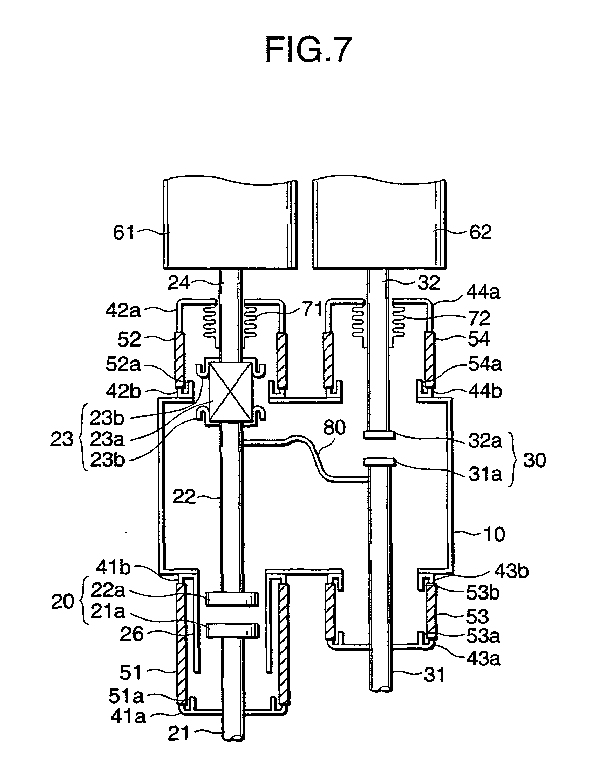

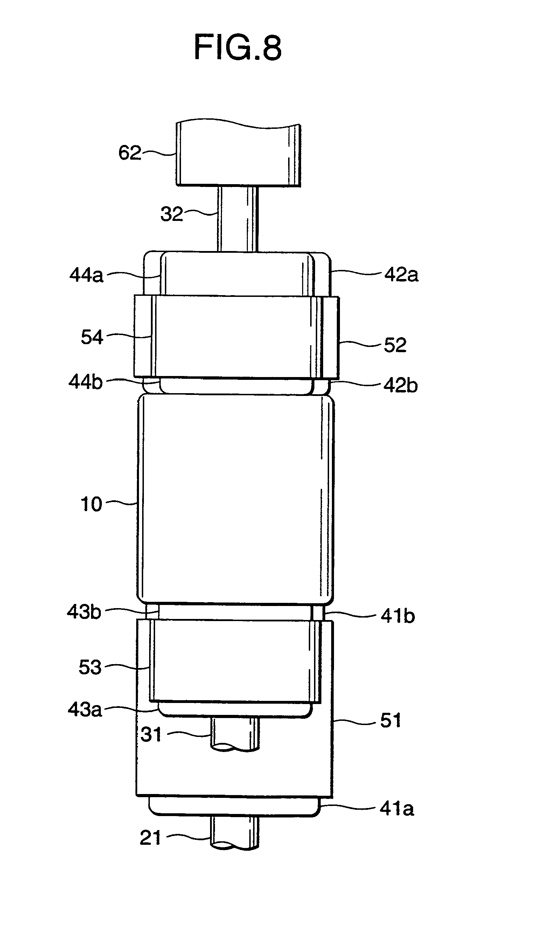

FIG. 7 is a front cross-sectional view showing the structure of the principal section of a switch gear according to a third embodiment of the present invention; and FIG. 8 is a side view of the same.

The ring 51b is omitted from the switch gear of the present embodiment, and the electrodes 21a and 22a and the arc shield 26 of the main circuit switch section 20 are provided inside the insulating material 51. The arc shield 26 doubles as a structure for alleviating an electric field developing in the vicinity of a junction between the insulating material 51 and the sealing member 41b. In other respects, the elements which are the same as those described in connection with the second embodiment are assigned the same reference numerals, and repeated explanations thereof are omitted.

In the switch gear having the previously-described structure, the electrodes 21a and 22a (constituting a pair) of the main circuit switch section 20 are housed in the insulating material 51, thus rendering the vacuum housing 10 compact. In a case where the vacuum housing 10 is formed through press working, the depth of a housing to be withdrawn is diminished, thus reducing the cost for manufacturing the vacuum housing 10.

### (Fourth Embodiment)

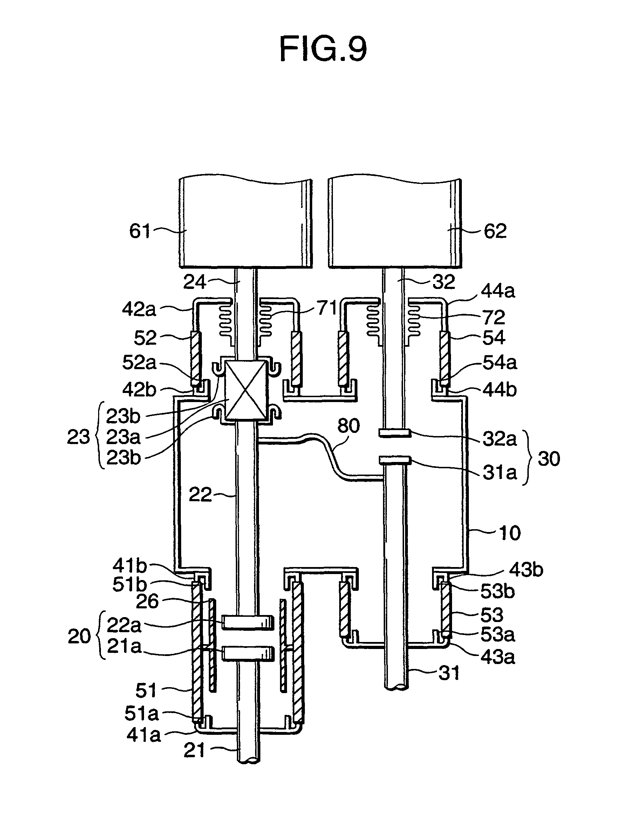

FIG. 9 is a front cross-sectional view showing the structure of the principal section of a switch gear according to a fourth embodiment of the present invention.

A supporting member for supporting the arc shield 26 provided around the electrodes 21a and 22a of the main circuit switch section 20 is provided around the outer peripheral surface of the arc shield 26. The support member is fixed on the center of the insulating material 51, thus securing the arc shield 26. The arc shield 26 is electrically insulated from the vacuum housing 10. In other respects, the elements which are the same as those described in connection with the third embodiment are assigned the same reference numerals, and repeated explanations thereof are omitted.

In the switch gear having the above-described configuration, the arc shield 26 is electrically insulated from the vacuum housing 10. Even in the event of a discharge arising from the electrodes 21a and 22a of the main circuit switch section 20 to the arc shield 26, the vacuum housing 10 is prevented from assuming a high electric potential, thus improving the withstand voltage performance of the switch gear.

The insulating material 51 may be formed from two components, and the arc shield 26 may be interposed between the components.

### (Fifth Embodiment)

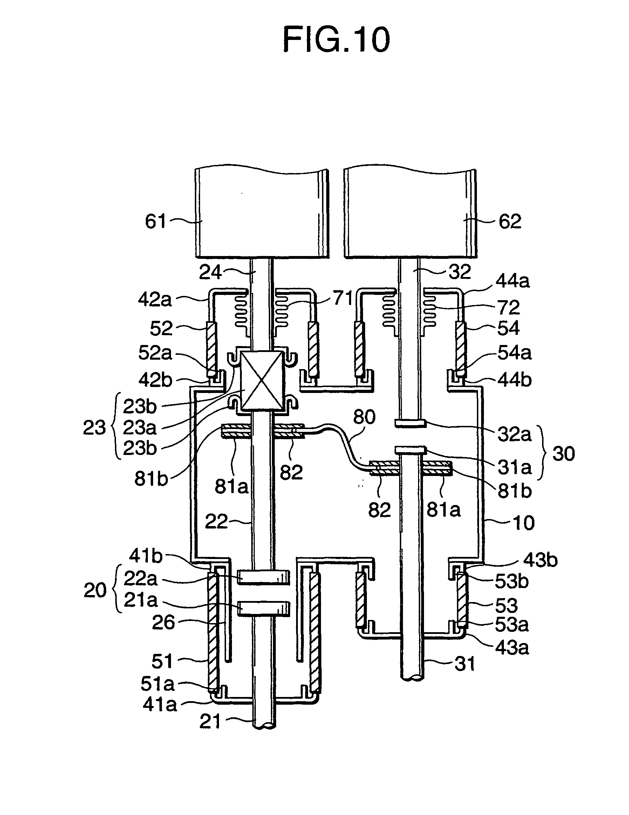

FIG. 10 is a front cross-sectional view showing the structure of the principal section of a switch gear according to a fifth embodiment of the present invention.

Either plate-like end of the elastic conductor 80 for electrically connecting the main circuit switch section 20 with the ground switch section 30 is sandwiched between a pair of conductor plates 81a and 81b. One conductor plate pair (consisting of the conductor plates 81a and 81b) is connected to the main circuit switch section 20, and the other conductor plate pair is connected to the ground switch section 30. The outer diameter of the conductor plates 81a and 81b is greater than that of the insulation rod 23. The conductor plates 81a and 81b alleviate concentration of an electric field on the end of the shields 23b of the insulation rod 23 and prevent adherence of metallic vapor to the surface of the insulating material 23a of the insulation rod 23, which would otherwise be caused when the main circuit switch section 20 is disconnected. In other respects, the elements which are the same as those described in connection with the third embodiment are assigned the same reference numerals, and repeated explanations thereof are omitted.

In the switch gear having the previously-described configuration, use of the conductor plates 81a and 81b facilitates connection of the elastic conductor 80 to the movable electrode rod 22 and the stationary electrode rod 31, thus improving ease of assembly. The conductor plates 81a and 81b alleviate an electric field developing in the end of the shield 23b of the insulation rod 23 and prevent adherence of metallic vapor to the surface of the insulating material 23a of the insulation rod 23, which would otherwise be caused when the main circuit switch section 20 is disconnected, thus improving the withstand voltage performance of the switch gear.

A metal plate having a large resistance value may be used as either the conductor plate 81a or 81b, for reinforcing the strength of the conductor plates.

### (Sixth Embodiment)

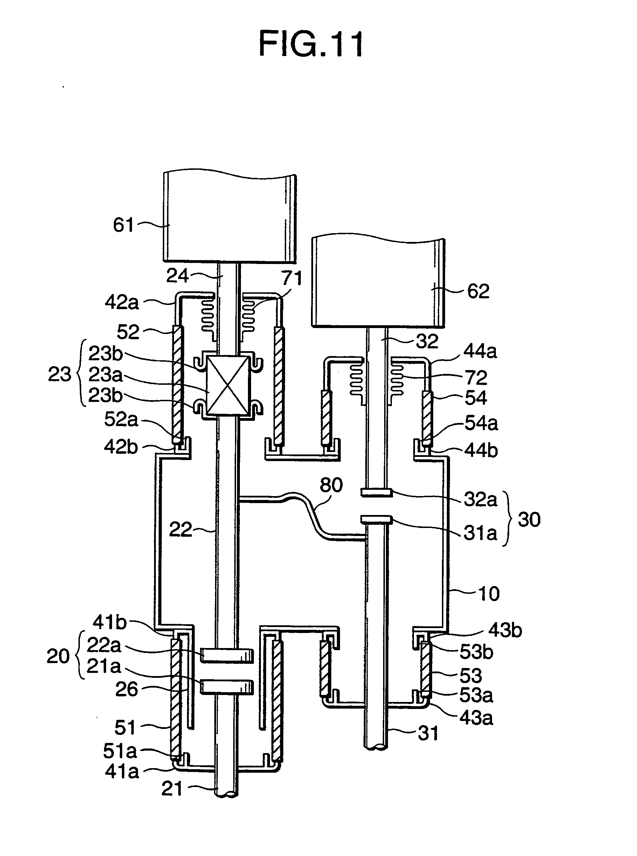

FIG. 11 is a front cross-sectional view showing the structure of the principal section of a switch gear according to a sixth embodiment of the present invention. The insulation rod 23 of the main circuit switch section 20 is provided inside the insulating material 52. Further, the electrode 31a of the ground switch section 30 is provided inside the insulating material 53, and the electrode 32a of the same is provided inside the insulating material 54. In other respects, the elements which are the same as those described in connection with the third embodiment are assigned the same reference numerals, and repeated explanations thereof are omitted.

In the switch gear having the previously-described configuration, within the vacuum housing 10, which may be in a power-on state, a disconnected state, or an open state, the insulation rod 23 in which the ground potential and the charging section faces each other is provided inside the insulating material 52, and the ground switch section 30 in which the ground potential and the charging section face each other is provided inside the insulating material 54. Consequently, the switch gear can reduce the risk of occurrence of a grounding fault, thus improving withstand voltage performance.

### (Seventh Embodiment)

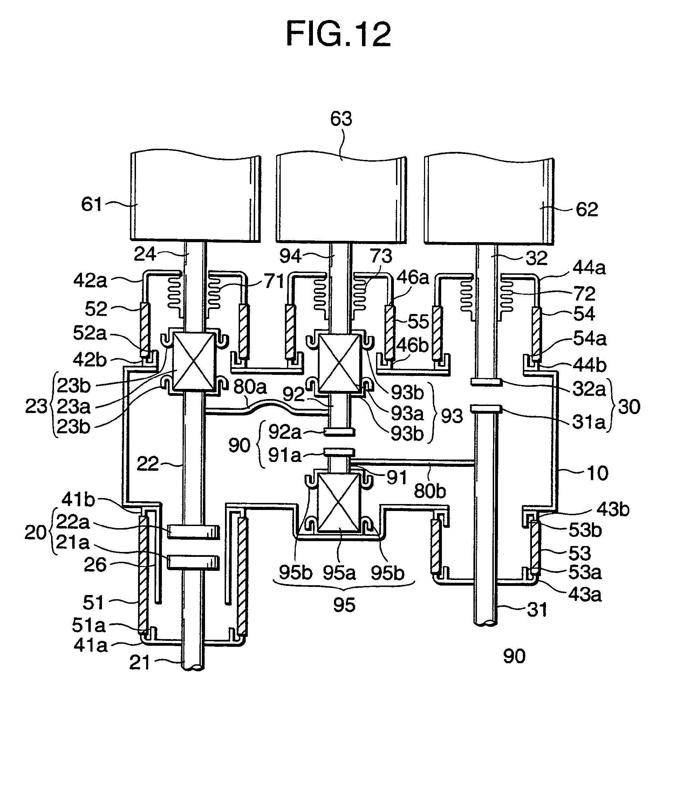

FIG. 12 is a front cross-sectional view showing the structure of the principal section of a switch gear according to a seventh embodiment of the present invention.

A switch section 90 consisting of a movable electrode 92a and a stationary electrode 91a is provided between the main circuit switch section 20 and the ground switch section 30. The movable electrode 92a is provided on the leading end of a movable electrode rod 92. An operation rod 94 is connected to the other end of the movable electrode rod 92, via an insulation rod 93 comprising an insulating material 92a and shields 93b. The operation rod 94 is connected to an operation section 63 for actuating the switch section 90. The operation rod 94 is connected to and electrically isolated from the vacuum housing 10, via a bellows 73, a sealing member 46a, insulating material 55, and a sealing member 46b. The operation rod 94 can be actuated while the internal air-tight seal of the vacuum housing 10 is maintained. The movable electrode 22 of the main circuit switch section 20 is electrically connected with the movable electrode rod 92 of the switch section 90, via an elastic conductor 90a.

The stationary electrode 91a is provided at the leading end of the stationary electrode rod 91. The other end of the stationary electrode rod 91 is attached to and electrically insulated from the vacuum housing 10, via insulating material 95a and an insulator support 95 including shields 95b. The stationary6 electrode rod 91 of the switch section 90 is electrically connected with the stationary electrode rod 31 of the ground switch section 30, via a conductor 80b. In other respects, the elements which are the same as those described in connection with the third embodiment are assigned the same reference numerals, and repeated explanations thereof are omitted.

In the switch gear having the foregoing configuration, the electrodes 91a and 92a of the switch section 90 as well as the electrodes 21a and 22a of the main circuit switch section 20 are opened when the switch gear is disconnected or grounded, thus improving withstand voltage performance.

As has been described in detail, in the switch gear according to the first embodiment, the vacuum housing is not grounded, and the potential of the vacuum housing is equal to an intermediate potential between the electric potential of the charging sections belonging to the main circuit switch section, and the ground switch section and the ground potential outside the vacuum housing. A potential difference between the vacuum housing and the charging sections and a potential difference between the vacuum housing and the ground potential do not increase, thus reducing the risk of occurrence of a grounding fault.

The main circuit switch section and the ground switch section are housed in a highly-insulating vacuum, and hence a required insulation distance between components can be diminished. Therefore, the switch gear of the present invention can be made more compact greater than can a prevailing switch gear.

Even in the event of an arc short circuit arising in the vacuum housing, no gas is present in the vacuum container, thereby eliminating the risk of explosion, which would otherwise be caused by an arc short circuit.

In the switch gear according to the second embodiment, the operation section of the main circuit switch section and the operation section of the ground switch section can be arranged adjacent to each other, thereby facilitating interlock between the drive mechanisms of the operation sections.

In the switch gear of the third embodiment, the electrode pair of the main circuit switch section is housed in the insulating material, thus improving withstand voltage performance. Accordingly, the insulating material can be made large, and the vacuum housing can be made compact. In a case where the vacuum housing is formed through press working, the depth of a housing to be withdrawn is diminished, thus reducing the cost for manufacturing the vacuum housing.

In the switch gear according to the fourth embodiment, the arc shield is electrically insulated from the vacuum housing. Even in the event of a discharge occurring from the electrode pair of the main circuit switch section to the arc shield, the vacuum housing is prevented from assuming a high electric potential, thus improving the withstand voltage performance of the switch gear.

In the switch gear according to the fifth embodiment, the outer diameter of the stationary section of the elastic conductor close to the main circuit switch section is greater than that of the insulation rod. The stationary section alleviates concentration of an electric field on the end of the shields of the insulation rod and prevents adherence of metallic vapor to the surface of the insulating material of the insulation rod, which would otherwise be caused when the main circuit switch section is disconnected.

In the switch gear according to the sixth embodiment, the insulation rod and the electrode pair of the ground switch section are disposed inside the insulating material, thus improving withstand voltage performance to a much greater extent.

In the switch gear according to the seventh embodiment, the busline can be connected to or disconnected from a load by means of an electrode pair provided at any portion on the elastic conductor as well as at any portion of the main circuit switch section, thus improving the withstand voltage performance of the switch gear to a much greater extent.

Preferred embodiments of the invention will now be described hereinbelow. Those elements which are the same as or correspond to those shown in FIGS. 19 and 20 are assigned the same reference numerals, and those elements will be explained by reference to the reference numerals.

### (Eighth Embodiment)

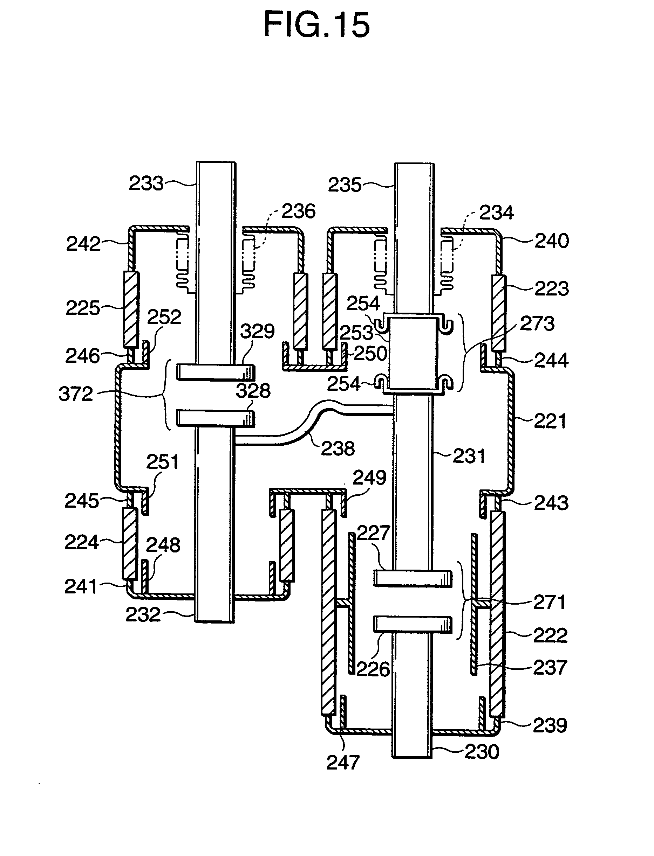

FIG. 15 is a front cross-sectional view showing the principal section of a switch gear according to an eighth embodiment of the present invention. A main circuit switch section 271 and a ground switch section 272 are provided within a metal housing body 221 of the switch gear. The main circuit switch section 271 comprises a stationary electrode 226 mounted on a stationary electrode rod 230 which acts as a busline-side conductor, and a movable electrode 227 mounted on a movable electrode rod 231. The stationary electrode rod 230 is attached to and electrically isolated from the housing body 221, by way of a first metal sealing section 239, a first ceramic insulation section 222, and a second metal sealing section 243. The movable electrode rod 231 is connected to an operation rod 235, by way of an insulation rod 273. The operation rod 235 is connected to a drive mechanism which switches the main circuit switch section 271 among a closed position, a shut-off position, and a open position. Further, the operation rod 235 is connected to a third sealing section 240, by way of a bellows 234. The third sealing section 240 is connected to the housing body 221 by way of a second sealing section 223 and a fourth sealing section 244.

The main circuit switch section 271 can be actuated while the internal air-tight seal of the housing body 221 is maintained by means of the bellows 234. The insulation rod 273 comprises an insulation section 253 and a shield section 254 attached to either end of the insulation section 253. The shield sections 254 are attached to the insulation section 253 for alleviating an electric field developing in a connection boundary between the insulation section 253 and the shield sections 254, protecting the surface of the insulation section 253, and protecting the insulation section 253 and the bellows 234 from metallic vapor which develops from electrodes 226 and 227 when the main circuit switch section 271 closes or opens a conducting path. An arc shield section 237 is provided around the main circuit switch section 271 and mounted on the first insulation section 222 for preventing splashing of metallic vapor from the electrodes 226 and 227, which would otherwise occur at the time of opening/closing of a conducting path. The main circuit switch section 271 is electrically insulated from the housing body 221. A first ring 247 is provided in the vicinity of a brazed section between the first sealing section 239 which is to act as a charging section and the first ceramic insulation section 222. A second ring 249 is provided in the vicinity of a brazed section between the second sealing section 243 which is to act as a charging section and the first ceramic insulation section 222. A third ring 250 is provided in the vicinity of a brazed section between the third and fourth sealing sections 240 and 244 which are to act as charging sections and the second insulation section 223. The first through third rings 247, 249, and 250 are provided for alleviating an electric field. The first ring 247 and the second ring 249 are provided inside the first insulation section 222 for protecting the interior wall surface of the first insulation section 222 from being stained by metallic vapor. The third ring 250 is provided inside the second insulation section 223 for protecting the interior wall surface of the second insulation section 223 from being stained by metallic vapor.

The ground switch section 272 comprises a stationary electrode 328 mounted on a stationary electrode rod 232 which serves as a load-side conductor, and a movable electrode 329 mounted on a movable electrode rod 233 which serves as a grounded ground-side conductor. The stationary electrode 328 and the movable electrode 329 are smaller than the stationary electrode 226 and the movable electrode 227 of the main circuit switch section 271. The stationary electrode rod 232 is attached to the housing body 221, by way of a first sealing section 241, a first insulation section 224, and a second sealing section 245. The movable electrode rod 233 is connected to a third sealing section 232 by way of a bellows 236. A third sealing section 242 is connected to the vacuum housing body 221, by way of a second insulation section 225 and a fourth sealing section 246.

The ground switch section 372 can be actuated while the internal air-tight seal of the vacuum housing body 221 is maintained by means of the bellows 236. A first ring 248 is provided in the vicinity of a brazed section between the first sealing section 241 which is to act as a charging section and the first ceramic insulation section 224. A second ring 251 is provided in the vicinity of a brazed section between the second sealing section 245 which is to act as a charging section and the first ceramic insulation section 224. A third ring 252 is provided in the vicinity of a brazed section between the third sealing section 242 and the fourth sealing section 246 which are to act as charging sections and the second insulation section 225. The first through third rings 248, 251, and 252 are provided for alleviating an electric field. The first ring 248 and the second ring 251 are provided inside the first insulation section 224 for protecting the interior wall surface of the first insulation section 224 from being stained by metallic vapor. The third ring 252 is provided inside the second insulation section 225 for protecting the interior wall surface of the second insulation section 225 from being stained by metallic vapor.

The movable electrode rod 231 of the main circuit switch section 271 is electrically connected to the stationary electrode rod 233 of the ground switch section 372 by means of an elastic conductor 238. In a case where the main circuit switch section 271 is closed and where the ground switch section 372 is open, an electric current supplied from the busline flows to loads by way of the stationary electrode rod 230, the elastic conductor 238, and the stationary electrode rod 232.

The housing body 221 is a constituent element of a housing, as are the sealing sections 222, 239, 240, 241, 242, 243, 244, 245, and 246 and the insulation sections 222, 223, 224, and 225. The housing maintains an internal vacuum of the switch gear.

The operation of the switch gear having the foregoing configuration will now be described.

During a normal operation, the operation rod 235 is actuated in a downward direction in FIG. 15, to thereby bring the movable electrode 227 into contact with the stationary electrode 226. Further, the movable electrode rod 233 is actuated upwardly, to thereby separate the movable electrode 329 away from the stationary electrode 328. The power supplied from the busline flows to loads, i.e., various types of equipment serving as loads, by way of the stationary electrode rod 230, the movable electrode rod 231, the elastic conductor 238, and the stationary electrode rod 232.

At the time of maintenance and inspection of equipment, the operation rod 235 is actuated in an upward direction in FIG. 15, to thereby separate the movable electrode 227 away from the stationary electrode 226 to a shut-off position and further to an open position. Subsequently, the movable electrode rod 233 shown in FIG. 15 is actuated downwardly, to thereby bring the movable electrode 329 into contact with the stationary electrode 328. Accordingly, the grounded movable electrode rod 233 is electrically connected with the stationary electrode rod 232, and hence electric charges remaining in and induced currents arising in the loads are caused to flow to ground by way of the stationary electrode rod 232 and the movable electrode rod 233. Further, the movable electrode 227 is separated from the stationary electrode 226 to a open position. Hence, application of power from the busline to various types of equipment acting as loads is prevented, thereby enabling a maintenance worker to perform maintenance safely.

In the switch gear having the foregoing configuration, the ground switch section 372 does not need an accidental current shut-off capability or a load current switching capability, which would be required by the main circuit switch section 271. In the eighth embodiment, the stationary electrode 328 and the movable electrode 329 of the ground switch section 372 are formed so as to become smaller and thinner than the stationary electrode 226 and the movable electrode 227 of the main circuit switch section 271 in consideration of the above-described feature of the ground switch section 372. As a result, the amount of Cu-W-based alloy used for forming the movable electrode 329 and the stationary electrode 328 is diminished, thus resulting in a reduction in manufacturing cost. Further, the ground switch section 372 is made compact, which in turn renders the entire switch gear compact. The stationary electrode 328 and the movable electrode 329 may be made compact in either diameter or thickness.

The stationary electrode 328 and the movable electrode 329 of the ground switch section 372 are required for achieving high welding-resistance capability (ease of separation of the electrodes) and high withstand voltage capability, as in the case of the stationary electrode 226 and the movable electrode 227 of the main circuit switch section 271. However, no demand exists for the stationary electrode 328 and the movable electrode 329 of the ground switch section 372 which have an accidental current shut-off capability or a load current switching capability. For these reasons, in contrast with the stationary electrode 226 and the movable electrode 227 which are made of Cu-Cr-based alloy, the stationary electrode 328 and the movable electrode 329 are made of Cu-W-based alloy.

The main circuit switch section 271 and the ground switch section 372 are housed in a highly-insulating vacuum, and hence a required insulation distance between the main circuit switch section 271 and the ground switch section 372 can be diminished. Further, even in the event of an arc short circuit arising in the vacuum housing, no gas is present in the vacuum container, thereby eliminating the risk of explosion, which would otherwise be caused by an arc short circuit, and ensuring a high degree of safety.

### (Ninth Embodiment)

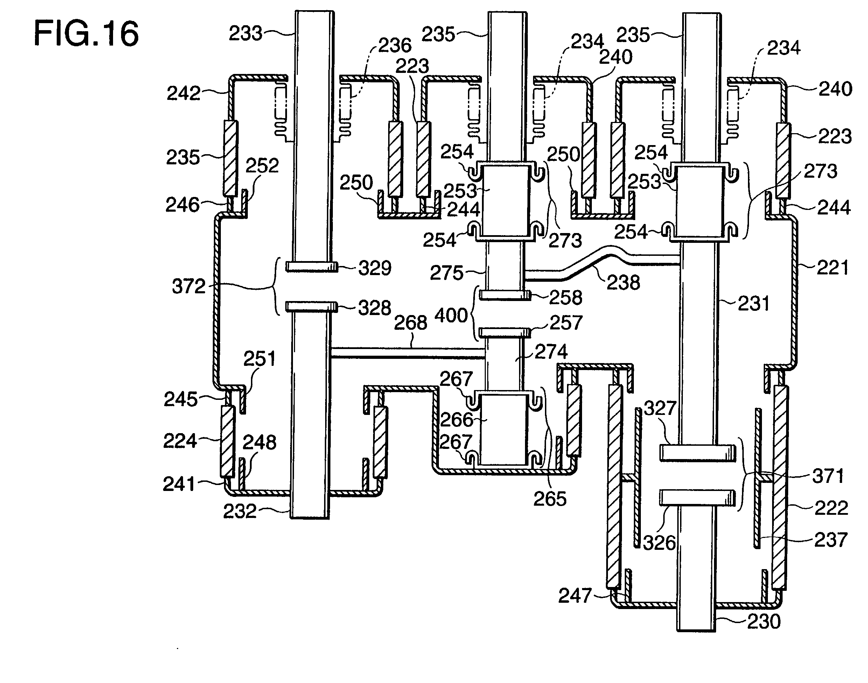

FIG. 16 is a front cross-sectional view showing the principal section of a switch gear according to a ninth embodiment of the present invention. In the explanations of present and subsequent embodiments, only constituent elements which are different from those described in connection with the eighth embodiment will be described.

The housing of the present embodiment houses therein:
a shut-off switch section 371 which interrupts a conducting path by separating the stationary electrode rod 230 acting as a busline-side conductor is separated from the stationary electrode rod 232 serving as a load-side conductor, and which has a movable electrode 327 and a stationary electrode 326;
a open switch section 400 which is electrically connected to the shut-off switch section 371 by way of the elastic conductor 238, which is opened after a stationary electrode 326 and a movable electrode 327 have been separated from each other, and which has a stationary electrode 257 and a movable electrode 258; and
a ground switch section 372 which is electrically connected to the open switch section 400 by way of a conductor 268, which separates a stationary electrode rod 232 from a movable electrode rod 233, the electrode rod 233 being grounded and acting as a ground-side conductor, and which has the stationary electrode 328 and the movable electrode 329.

The movable electrode 258 of the open switch section 400 is mounted on the leading end of the movable electrode rod 275, and the stationary electrode 257 is mounted on the stationary electrode rod 274. The stationary electrode rod 274 and the stationary electrode rod 232 are electrically connected by way of the conductor 268. The stationary electrode rod 274 is attached to the housing body 221 by way of an insulating support section 265. The insulation support section 265 comprises a cylindrical insulation section 266, and an electric field alleviation shield section 267 attached to either end of the insulation section 266. The movable electrode rod 275 is attached to the housing body 221 by means of a support structure which is the same as that used for supporting the movable electrode rod 231 of the shut-off switch section 371. The support structure and its surrounding structure are the same as the structure for supporting the movable electrode rod 231 of the shut-off switch section 371 and its surrounding structure. Hence, the same reference numeral is assigned to the structure, and its explanation is omitted.

The stationary electrode 257 and the movable electrode 258 of the shut-off switch section 400 have a shut-off capability and are identical with the stationary electrode 328 and the movable electrode 329 of the ground switch section 372, because these electrodes do not need an accidental current shut-off capability or a load current switching capability. Further, electrodes identical with the stationary electrode 328 and the movable electrode 329 of the ground switch section 372 are used as the stationary electrode 257 and the movable electrode 258.

At the time of maintenance and inspection of equipment, the operation rod 235 is actuated in an upward direction in FIG. 16, to thereby separate the movable electrode 327 away from the stationary electrode 326 to a shut-off position. The operation rod 235 coupled to the movable electrode rod 275 is actuated in an upward direction in FIG. 16, thereby causing the movable electrode 75 of the shut-off switch section 400 to depart from the stationary electrode 257 to a open position. Subsequently, the movable electrode rod 233 shown in FIG. 16 is actuated downwardly, to thereby bring the movable electrode 329 into contact with the stationary electrode 328. Accordingly, the grounded movable electrode rod 233 is electrically connected with the stationary electrode rod 232, and hence electric charges remaining in and induced currents arising in the loads are caused to flow to ground by way of the stationary electrode rod 232 and the movable electrode rod 233. Further, the stationary electrode 230 serving as a busline-side conductor and the stationary electrode rod 232 serving as a load-side conductor are disconnected as a result of the movable electrode 258 being separated from the stationary electrode 257, thereby preventing application of power from the busline to various types of equipment acting as loads and enabling a maintenance worker to perform maintenance safely.

In the present embodiment, when the switch gear is in an opened or grounded state, the stationary electrode 257 and the movable electrode 258 of the open switch section 400 are open. The withstand voltage performance of the switch gear is achieved by means of a gap between the stationary electrode 326 and the movable electrode 327 of the shut-off switch section 371 and a gap between the stationary electrode 257 and the movable electrode 258, thus improving the withstand voltage performance of the switch gear. Further, as in the case of the stationary electrode 328 and the movable electrode 329 of the ground switch section 372, the stationary electrode 257 and the movable electrode 258 of the shut-off switch section 400 do not need an accidental current shut-off capability or a load current switching capability, which would be required by the shut-off circuit switch section 371. Accordingly, a common electrode can be used for the stationary electrode 257 and the movable electrode 258 of the shut-off switch section 400, as well as for the stationary electrode 328 and the movable electrode 329 of the ground switch section 372 are formed.

### (Tenth Embodiment)

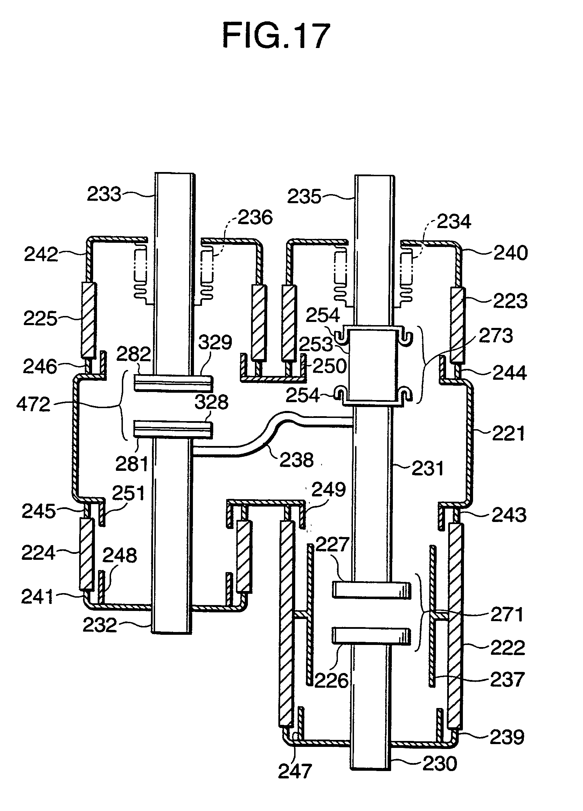

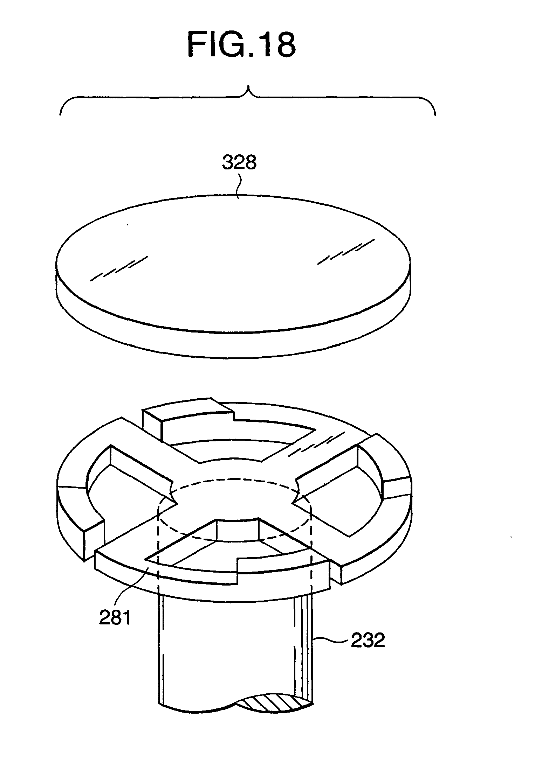

FIG. 17 is a front cross-sectional view showing the principal section of another conventional switch gear example according a tenth embodiment, and FIG. 18 is a perspective view showing the principal section shown in FIG. 17.

In the present embodiment, a magnetic-field generation section 281 is mounted on the back of the stationary electrode 328 of a ground switch section 472 for generating a magnetic field in the axial direction of the stationary electrode rod 232. Further, a magnetic-field generation section 282 is mounted on the back of the movable electrode 329 of a ground switch section 472 for generating a magnetic field in the axial direction of the movable electrode rod 233.

If insufficient external pressure is applied in the direction in which the movable electrode 329 is brought into contact with the stationary electrode 328 when the ground switch section 472 is grounded and closed, after the stationary electrode 328 and the movable electrode 329 have been brought into contact with each other, repulsion acts between the stationary electrode 328 and the movable electrode 329, thus causing a gap therebetween and generating an arc. The act causes the stationary electrode 328 and the movable electrode 329 to splash metallic vapor. Accordingly, the area of the stationary electrode 328 and the movable electrode 329 fused by the arc is increased. Accordingly, a greater removal force must be applied to the movable electrode rod 233 in order to open the ground switch section 472.

In order to prevent occurrence of an arc, there must be required external pressure sufficient for preventing occurrence of a gap, which would otherwise be caused after the stationary electrode 328 and the movable electrode 329 have been brought into contact with each other. An increase in external pressure involves a necessity of reinforcing the strength of the drive mechanism coupled to the movable electrode rod 233, thus increasing load of manual operation.

In the present embodiment, when the ground switch section 472 is grounded and closed, an electric current flows from the stationary electrode rod 232 to the movable electrode rod 233 by way of the ground switch section 472. At this time, the electric current flows through the magnetic-field generation sections 281 and 282. By means of the magnetic field developing as a result of a current flowing through the magnetic-field generation sections 281 and 282, the stationary electrode 328 and the movable electrode 329 attract each other, thus preventing occurrence of a gap therebetween. Accordingly, there is prevented splashing of metallic vapor of the stationary electrode 328 and the movable electrode 329, which would otherwise be caused by an arc after stationary electrode 328 and the movable electrode 329 have been brought into contact with each other. Further, the amount of electrode fused by an arc is diminished, thereby enabling opening of the ground switch section 472 with small force. Consequently, a mechanism for actuating the ground switch section 472 can be made compact.

As has been described above, in embodiments of the present invention, a movable electrode and a stationary electrode of a ground switch section are smaller than a movable electrode and a stationary electrode of a main circuit switch section. Accordingly, the entire switch gear can be made compact, and its cost can also be reduced.

In embodiments of the present invention, a movable electrode and a stationary electrode of a open switch section and a movable electrode and a stationary electrode of a ground switch section are smaller than a movable electrode and a stationary electrode of a shut-off switch section. Accordingly, the entire switch gear can be made compact, and its cost can also be reduced.

In embodiments of the present invention, a magnetic-field generation section is provided on the back of the movable electrode of the ground switch section, and a magnetic-field generation section is provided on the back of the stationary electrode of the ground switch section. When a conducting path is closed, the magnetic-field generation sections generate a magnetic field so as to cause the movable electrode and the stationary electrode to attract each other. Accordingly, there is prevented splashing of metallic vapor of a stationary electrode and a movable electrode, which would otherwise be caused by an arc after the stationary electrode and the movable electrode have been brought into contact with each other. Further, the amount of electrode fused by an arc is diminished, thereby enabling opening of a ground switch section with small force. Consequently, a mechanism for actuating the ground switch section can be made compact.

In embodiments of the present invention, the movable electrode and the stationary electrode of the open switch section and the movable electrode and the stationary electrode of the ground switch section are formed into a single shape and from a single material. Therefore, a common electrode can be used for the stationary electrode and the movable electrode of the shut-off switch section, as well as for the stationary electrode and the movable electrode of the ground switch section are formed.

In embodiments of the present invention, a material for the movable electrode and the stationary electrode of the main circuit switch section can be selected from materials having excellent accidental current shut-off capability, load current switching capability, welding-resistance capability, and withstand voltage capability. Material for the movable electrode and the stationary electrode of the ground switch section can be selected from materials having excellent welding-resistance capability and withstand voltage capability.

In embodiments of the present invention, material for the movable electrode and the stationary electrode of the shut-off switch section can be selected from materials having excellent accidental current shut-off capability, load current switching capability, welding-resistance capability, and withstand voltage capability. Material for the movable electrode and the stationary electrode of the open switch section, as well as for the movable electrode and the stationary electrode of the ground switch section, can be selected from materials having excellent welding-resistance capability and withstand voltage capability.

In embodiments of the present invention, a housing corresponds to a vacuum housing. Therefore, there can be prevented gas expansion explosion, which would otherwise be caused by an arc short circuit, and increasing safety.

## Claims

1. A switch gear comprising:
a vacuum housing (10, 41a, 41b, 42a, 42b, 43a, 43b, 44a, 44b, 221, 232-246) which is to be electrically insulated from a ground potential, said housing houses therein:
a main circuit switch section (20, 271, 371) for establishing/disconnecting a connection between a stationary electrode (21, 230) connected to either a busline-side conductor or a load-side conductor, and a movable electrode (22, 231) connected to the remaining conductor; and
a ground switch section (30, 372) for establishing/disconnecting a connection between a stationary electrode (31, 232) connected to either the load-side conductor or a ground conductor, and a movable electrode (32, 233) connected to the remaining conductor,
said switch gear being **characterised by**:
a sealing member (51-54) or section (222-225, 235); and a ring (51a, 51b, 52a, 53a, 53b, 54a, 247-252) alleviating an electric field developing in boundary areas between said sealing member or section and said housing and protecting the internal surface of said sealing member or section.

2. The switch gear as defined in claim 1, wherein
two operation sections, one actuating said main circuit switch section (20, 271, 371) and the other actuating said ground switch section (30, 372) are provided side by side within the outer peripheral surface of said vacuum housing.

3. The switch gear as defined in claim 1 or 2, wherein
said pair of electrodes of said main circuit switch section (20, 271, 371) are provided inside insulating material (51, 52, 224, 225, 235) for electrically insulating a stationary portion of said main circuit switch section (20, 271, 371) from said vacuum housing.

4. The switch gear as defined in any one of claims 1 through 3, wherein
an arc shield (26, 237) provided around the electrode of said main circuit switch section (20, 271, 371) is electrically insulated from said vacuum housing.

5. The switch gear as defined in any one of claims 1 through 4, further comprising:
an insulation rod (23, 273) which is connected to a load-side electrode of said main circuit switch section (20, 271, 371) and comprises a metal shield (23b, 254) for alleviating an electric field, and
an elastic conductor (80, 238) which is electrically connected to a load-side electrode of said main circuit switch section (20, 271, 371) and to a load-side electrode of said ground switch section (30, 372), a stationary portion of said elastic conductor close to said main circuit switch section (20, 271, 371) having an outer diameter greater than that of said insulation rod (23, 273).

6. The switch gear as defined in claim 5, wherein
said insulation rod (23, 273) of said main circuit switch section (20, 271, 371) is provided inside an insulating material (23a, 253) for electrically insulating a movable portion of said main circuit switch section (20, 271, 371) from said vacuum housing, and
said electrode pair of said ground switch section (30, 372) is disposed inside an insulating material (53, 54, 224, 225, 235) for electrically insulating a movable portion of said ground switch section (30, 372) from said vacuum housing.

7. The switch gear as defined in any one of claims 1 through 4, wherein
a pair of electrodes which is opened or closed are provided with an elastic conductor (80, 238) which electrically connects a load-side electrode of said main circuit switch section (20, 271, 371) with a load-side electrode of said ground switch section (30, 372).

8. A switch gear as defined in claim 1, wherein
the movable electrode (32, 233) and the stationary electrode (31, 232) of said ground switch section (30, 372) are smaller than the movable electrode (22, 231) and the stationary electrode (21, 230) of said main circuit switch (20, 271, 371).

9. A switch gear as defined in claim 1, wherein
the housing further houses therein:
an open switch section (90, 400) which is electrically connected to said main circuit switch section (20, 271, 371), is openable after the movable electrode and the stationary electrode is separated from each other, and has a movable electrode (92a, 258) and a stationary electrode (91a, 257), and
said ground switch section (30, 372) being electrically connected to said open switch section (90, 400), for separating the load-side conductor from a grounded ground-side conductor, wherein
the movable electrode and the stationary electrode of said open switch section (90, 400) and the movable electrode and the stationary electrode of said ground switch section (30, 372) are smaller than the movable electrode and the stationary electrode of said main circuit switch section (20, 271, 371).

10. The switch gear as defined in claim 8 or 9, wherein
a magnetic-field generation section (282) is provided on the back of the movable electrode (32, 233) of said ground switch section (30, 372), and
a magnetic-field generation section (281) is provided on the back of the stationary electrode (31, 232) of the ground switch section (30, 372), said magnetic-field generation sections (281, 282) are provided for generating a magnetic field to cause the movable electrode and the stationary electrode to attract each other when a conducting path is closed.

## Patentansprüche

1. Schalteinrichtung, mit:
einem Vakuumgehäuse (10, 41a, 41b, 42a, 42b, 43a, 43b, 44a, 44b, 221, 232-246), das von einem Massepotential elektrisch zu isolieren ist, wobei das Gehäuse in ihm aufgenommen hat:
einen Hauptschaltkreis-Schaltabschnitt (20, 271, 371) zum Herstellen/Trennen einer Verbindung zwischen einer stationären Elektrode (21, 230), die entweder mit einem Sammelleitungsseiten-Leiter oder einem Lastseiten-Leiter verbunden ist, und einer bewegbaren Elektrode (22, 231), die mit dem verbleibenden Leiter verbunden ist; und
einen Masse-Schaltabschnitt (30, 372) zum Herstellen/Trennen einer Verbindung zwischen einer stationären Elektrode (31, 232), die entweder mit einem Lastseiten-Leiter oder einem Masse-Leiter verbunden ist, und einer bewegbaren Elektrode (32, 233), die mit dem verbleibenden Leiter verbunden ist,
wobei die Schalteinrichtung **gekennzeichnet ist durch**:
ein Dichtungselement (51-54) oder einen Dichtungsabschnitt (222-225, 235); und
einen Ring (51a, 51b, 52a, 53a, 53b, 54a, 247-252), der ein elektrisches Feld mindert, das sich in Grenzbereichen zwischen dem Dichtungselement oder -abschnitt und dem Gehäuse entwickelt, und die innere Oberfläche des Dichtungselements oder -abschnitts schützt.

2. Schalteinrichtung nach Anspruch 1, bei der
zwei Betriebsabschnitte, wobei einer den Hauptschaltkreis-Schaltabschnitt (20, 271, 371) betätigt und der andere den Masse-Schaltabschnitt (30, 372) betätigt, Seite an Seite in der äußeren Umfangsoberfläche des Vakuumgehäuses vorgesehen sind.

3. Schalteinrichtung nach Anspruch 1 oder 2, bei der
das Paar von Elektroden des Hauptschaltkreis-Schaltabschnitts (20, 271, 371) im Innern von Isoliermaterial (51, 52, 224, 225, 235) vorgesehen sind, zur elektrischen Isolierung eines stationären Teils des Hauptschaltkreis-Schaltabschnitts (20, 271, 371) von dem Vakuumgehäuse.

4. Schalteinrichtung nach einem der Ansprüche 1 bis 3, bei der
ein Lichtbogenschutzschild (26, 237), das um die Elektrode des Hauptschaltkreis-Schaltabschnitts (20, 271, 371) herum vorgesehen ist, von dem Vakuumgehäuse elektrisch isoliert ist.

5. Schalteinrichtung nach einem der Ansprüche 1 bis 4, ferner mit:
einem Isolierstab (23, 273), der mit einer Lastseiten-Elektrode des Hauptschaltkreis-Schaltabschnitts (20, 271, 371) verbunden ist und ein Metallschutzschild (23b, 254) umfasst, zum Mindern eines elektrischen Felds, und
einem elastischen Leiter (80, 238), der mit einer Lastseiten-Elektrode des Hauptschaltkreis-Schaltabschnitts (20, 271, 371) und einer Lastseiten-Elektrode des Masse-Schaltabschnitts (30, 372) elektrisch verbunden ist, wobei ein stationärer Teil des elastischen Leiters, nahe an dem Hauptschaltkreis-Schaltabschnitt (20, 271, 371), einen größeren Außendurchmesser aufweist als derjenige des Isolierstabs (23, 273).

6. Schalteinrichtung nach Anspruch 5, bei der
der Isolierstab (23, 273) des Hauptschaltkreis-Schaltabschnitts (20, 271, 273) im Innern eines Isoliermaterials (23a, 253) vorgesehen ist, zur elektrischen Isolierung eines bewegbaren Teils des Hauptschaltkreis-Schaltabschnitts (20, 271, 371) von dem Vakuumgehäuse, und
wobei das Elektrodenpaar des Masse-Schaltabschnitts (30, 372) im Innern eines Isoliermaterials (53, 54, 224, 225, 235) angeordnet ist, zur elektrischen Isolierung eines bewegbaren Teils des Masse-Schaltabschnitts (30, 372) von dem Vakuumgehäuse.

7. Schalteinrichtung nach einem der Ansprüche 1 bis 4, bei der
ein Paar von Elektroden, das geöffnet oder geschlossen ist, mit einem elastischen Leiter (80, 238) versehen ist, der eine Lastseiten-Elektrode des Hauptschaltkreis-Schaltabschnitts (20, 271, 371) mit einer Lastseiten-Elektrode des Masse-Schaltabschnitts (30, 372) elektrisch verbindet.

8. Schalteinrichtung nach Anspruch 1, bei der
die bewegbare Elektrode (32, 233) und die stationäre Elektrode (31, 232) des Masse-Schaltabschnitts (30, 372) kleiner sind als die bewegbare Elektrode (22, 231) und die stationäre Elektrode (21, 230) des Hauptschaltkreis-Schaltabschnitts (20, 271, 371).

9. Schalteinrichtung nach Anspruch 1, bei der
das Gehäuse ferner in ihm aufgenommen hat:
einen Öffnungs-Schaltabschnitt (90, 400), der mit dem Hauptschaltkreis-Schaltabschnitt (20, 271, 371) elektrisch verbunden ist, wobei er geöffnet werden kann, nachdem die bewegbare Elektrode und die stationäre Elektrode voneinander getrennt sind, und der eine bewegbare Elektrode (92a, 258) und eine stationäre Elektrode (91a, 257) aufweist, und
wobei der Masse-Schaltabschnitt (30, 372) mit dem Öffnungs-Schaltabschnitt (90, 400) elektrisch verbunden ist, zum Separieren des Lastseiten-Leiters von einem geerdeten Masseseiten-Leiter, wobei
die bewegbare Elektrode und die stationäre Elektrode des Öffnungs-Schaltabschnitts (90, 400) und die bewegbare Elektrode und die stationäre Elektrode des Masse-Schaltabschnitts (30, 372) kleiner sind als die bewegbare Elektrode und die stationäre Elektrode des Hauptschaltkreis-Schaltabschnitts (20, 271, 371).

10. Schalteinrichtung nach Anspruch 8 oder 9, bei der
ein Magnetfeld-Erzeugungsabschnitt (282) an der Rückseite der bewegbaren Elektrode (32, 233) des Masse-Schaltabschnitts (30, 372) vorgesehen ist, und
ein Magnetfeld-Erzeugungsabschnitt (281) an der Rückseite der stationären Elektrode (31, 232) des Masse-Schaltabschnitts (30, 372) vorgesehen ist, wobei die Magnetfeld-Erzeugungsabschnitte (281, 282) zum Erzeugen eines Magnetfelds vorgesehen sind, um zu bewirken, dass die bewegbare Elektrode und die stationäre Elektrode sich einander anziehen, wenn ein Leitungspfad geschlossen ist.

## Revendications

1. Dispositif de commutation comprenant :
un boîtier sous vide (10, 41a, 41b, 42a, 42b, 43a, 43b, 44a, 44b, 221, 232 - 246) qui doit être isolé électriquement d'un potentiel de terre, ledit boîtier logeant en son sein
une section de commutation de circuit principal (20, 271, 371) pour établir / déconnecter une connexion entre une électrode immobile (21, 230) reliée à l'un ou l'autre d'un conducteur côté ligne omnibus ou d'un conducteur côté charge, et une électrode mobile (22, 231) reliée au conducteur restant ; et
une section de commutation à la terre (30, 372) pour établir / déconnecter une connexion entre une électrode immobile (31, 232) reliée à l'un ou l'autre du conducteur côté charge et d'un conducteur de mise à la terre, et une électrode mobile (32, 233) reliée au conducteur restant,
ledit dispositif de commutation étant **caractérisé par** :
un élément (51 - 54) ou une section (222 - 225, 235) d'étanchéité ; et
un anneau (51a, 51b, 52a, 53a, 53b, 54a, 247 - 252) atténuant un champ électrique se développant dans les zones de délimitation entre ledit élément ou ladite section d'étanchéité et ledit boîtier et protégeant la surface interne dudit élément ou de ladite section d'étanchéité.

2. Dispositif de commutation selon la revendication 1, dans lequel
deux sections de mise en fonctionnement, l'une actionnant ladite section de commutation de circuit principal (20, 271, 371) et l'autre actionnant ladite section de commutation à la terre (30, 372) sont prévues côte à côte dans la surface périphérique extérieure dudit boîtier sous vide.

3. Dispositif de commutation selon la revendication 1 ou 2, dans lequel
ladite paire d'électrodes de ladite section de commutation de circuit principal (20, 271, 371) est prévue à l'intérieur d'un matériau isolant (51, 52, 224, 225, 235) pour isoler électriquement une partie immobile de ladite section de commutation de circuit principal (20, 271, 371) dudit boîtier sous vide.

4. Dispositif de commutation selon l'une quelconque des revendications 1 à 3, dans lequel
un écran protecteur (26, 237) disposé autour de l'électrode de ladite section de commutation de circuit principal (20, 271, 371) est isolé électriquement dudit boîtier sous vide.

5. Dispositif de commutation selon l'une quelconque des revendications 1 à 4, comprenant en outre :
une tige d'isolation (23, 273) qui est reliée à une électrode côté charge de ladite section de commutation de circuit principal (20, 271, 371) et comprend un blindage métallique (23b, 254) pour atténuer un champ électrique, et
un conducteur élastique (80, 238) qui est relié électriquement à une électrode côté charge de ladite section de commutation de circuit principal (20, 271, 371) et à une électrode côté charge de ladite section de commutation de mise à la terre (30, 372), une partie immobile dudit conducteur élastique proche de ladite section de commutation de circuit principal (20, 271, 371) ayant un diamètre extérieur supérieur à celui de ladite tige d'isolation (23, 273).

6. Dispositif de commutation selon la revendication 5, dans lequel
ladite tige d'isolation (23, 273) de ladite section de commutation de circuit principal (20, 271, 371) est disposée à l'intérieur d'un matériau isolant (23a, 253) pour isoler électriquement une partie mobile de ladite section de commutation de circuit principal (20, 271, 371) dudit boîtier sous vide, et
ladite paire d'électrodes de ladite section de commutation de mise à la terre (30, 372) est disposée à l'intérieur d'un matériau isolant (53, 54, 224, 225, 235) pour isoler électriquement une partie mobile de ladite section de commutation de mise à la terre (30, 372) dudit boîtier sous vide.

7. Dispositif de commutation selon l'une quelconque des revendications 1 à 4, dans lequel
une paire d'électrodes qui est ouverte ou fermée est munie d'un conducteur élastique (80, 238) qui relie électriquement une électrode côté charge de ladite section de commutation de circuit principal (20, 271, 371) à une électrode côté charge de ladite section de commutation de mise à la terre (30, 372).

8. Dispositif de commutation selon la revendication 1, dans lequel
l'électrode mobile (32, 233) et l'électrode immobile (31, 232) de ladite section de commutation de mise à la terre (30, 372) sont plus petites que l'électrode mobile (22, 231) et l'électrode immobile (21, 230) de ladite section de commutation de circuit principal (20, 271, 371).

9. Dispositif de commutation selon la revendication 1, dans lequel
le boîtier loge en outre en son sein :
une section de commutation ouverte (90, 400) qui est reliée électriquement à ladite section de commutation de circuit principal (20, 271, 371), peut être ouverte après que l'électrode mobile et l'électrode immobile ont été séparées l'une de l'autre, et comporte une électrode mobile (92a, 258) et une électrode immobile (91a, 257), et
ladite section de commutation de la mise à la terre (30, 372) étant reliée électriquement à ladite section de commutation ouverte (90, 400) pour séparer le conducteur côté charge d'un conducteur côté terre relié à la terre, dans lequel
l'électrode mobile et l'électrode immobile de ladite section de commutation ouverte (90, 400) et l'électrode mobile et l'électrode immobile de ladite section de commutation de mise à la terre (30, 372) sont plus petites que l'électrode mobile et l'électrode immobile de ladite section de commutation de circuit principal (20, 271, 371).

10. Dispositif de commutation selon la revendication 8 ou 9, dans lequel
une section de génération de champ magnétique (282) est prévue sur l'arrière de l'électrode mobile (32, 233) de ladite section de commutation de mise à la terre (30, 372), et
une section de génération de champ magnétique (281) est prévue sur l'arrière de l'électrode immobile (31, 232) de la section de commutation de mise à la terre (30, 372), lesdites sections de génération de champ magnétique (281, 282) sont prévues pour générer un champ magnétique afin d'amener l'électrode mobile et l'électrode immobile à s'attirer l'une l'autre lorsqu'un chemin conducteur est fermé.
